(19) **Europäisches Patentamt**
**European Patent Office**
**Office européen des brevets**

(11) Veröffentlichungsnummer : **0 336 346 B1**

(12)                        **EUROPÄISCHE PATENTSCHRIFT**

(45) Veröffentlichungstag der Patentschrift :
**10.07.91 Patentblatt 91/28**

(51) Int. Cl.$^5$ : **C02F 1/48**

(21) Anmeldenummer : **89105834.9**

(22) Anmeldetag : **03.04.89**

(54) **Vorrichtung zur elektromagnetischen Behandlung von Flüssigkeiten, insbesondere Wasser.**

(30) Priorität : **06.04.88 AT 882/88**

(43) Veröffentlichungstag der Anmeldung :
**11.10.89 Patentblatt 89/41**

(45) Bekanntmachung des Hinweises auf die
Patenterteilung :
**10.07.91 Patentblatt 91/28**

(84) Benannte Vertragsstaaten :
**AT BE CH DE GB IT LI NL SE**

(56) Entgegenhaltungen :
**EP-A- 0 190 545**
**AT-B- 382 600**

(73) Patentinhaber : **Preis, Peter**
**Schönangerweg 706/2**
**A-6100 Seefeld (AT)**

(72) Erfinder : **Preis, Peter**
**Schönangerweg 706/2**
**A-6100 Seefeld (AT)**

(74) Vertreter : **Hofinger, Engelbert et al**
**Torggler-Hofinger Wilhelm-Greil-Strasse 16**
**A-6020 Innsbruck (AT)**

## Beschreibung

Die Erfindung bezieht sich auf eine Vorrichtung zur elektromagnetischen Behandlung von Flüssigkeiten, insbesondere Wasser, zur Beseitigung von Kesselstein od.dgl., indem die Flüssigkeit einem magnetischen Kraftfeld ausgesetzt wird, mit einer von zwei tellerförmigen Schalen gebildeten Turbulenzkammer, die von einer elektromagnetischen Spule umgeben wird, mit einem Einlaß und einem Auslaß für die Flüssigkeit, wobei der Einlaß und der Auslaß außermittig angeordnet sind und sich zwischen dem Einlaß und dem Auslaß ein Ablenksteg befindet, der dichtend zwischen den Innenwänden der Schalen liegt und wobei ein Dichtring die Turbulenzkammer gegenüber der elektromagnetischen Spule abdichtet.

Eine derartige Vorrichtung ist beispielsweise aus der AT-PS 382 600 bekannt.

Bei dieser Vorrichtung wird angestrebt, daß das zu behandelnde Wasser möglichst intensiv der Wirkung des elektromagnetischen Kraftfeldes ausgesetzt wird. Es ist bereits vorgeschlagen worden, das Wasser mehrmals durch das Magnetfeld zu führen. Ebenso ist vorgeschlagen worden, die Verwirbelung und Turbulenz des Wassers zu erhöhen, weil auch dies zu einer besseren Wirkung des Magnetfeldes führt.

Aufgabe der Erfindung ist es, eine Vorrichtung der eingangs erwähnten Art noch weiter zu verbessern, d.h. die Verwirbelung des Wassers gegenüber herkömmlichen Geräten zu erhöhen und das Wasser verstärkt magnetisch zu behandeln.

Die erfindungsgemäße Aufgabe wird dadurch gelöst, daß mehrere zueinander parallele Ablenkstege vorgesehen sind, die in Eckpunkten eines Vierecks liegen.

Vorteilhaft ist vorgesehen, daß zwei Ablenkstege auf einer gemeinsamen Geraden liegen und zwei Ablenkstege auf gegenüberliegenden Seiten und parallel zu dieser Geraden angeordnet sind.

Dabei sind jeweils zwei Ablenkstege gleich lang. Vorteilhaft sind die Ablenkstege, die auf einer gemeinsamen Achse liegen, länger als die beiden anderen Ablenkstege.

Ein Ausführungsbeispiel der Erfindung sieht vor, daß mindestens eine Schale innen mit Nuten versehen ist, die konzentrische Kreise bilden.

Durch die Nuten, die vorteilhaft unterschiedliche Breite haben, wird das Wasser in Rotation versetzt, wodurch die Ablenkstege auch als Prallbleche wirken.

Die Anordnung der Ablenkstege erfolgt vorteilhaft so, daß die Ablenkstege, die auf der gemeinsamen Geraden liegen, mit ihren Enden jeweils eine Nut berühren.

Ein weiteres Ausführungsbeispiel der Erfindung sieht vor, daß in der Mitte der Turbulenzkammer zwischen den beiden einander parallel gegenüberliegenden Ablenkstegen auf einer der Schalen ein Kegel und/oder auf der anderen Schale eine den Kegelstumpf mit Abstand aufnehmende konusartige Vertiefung ausgebildet ist.

Der elektromagnetische Einfluß auf das Wasser kann vorteilhaft dadurch erhöht werden, daß in der Mitte der Turbulenzkammer, zwischen den beiden einander parallel gegenüberliegenden Ablenkstegen eine zweite elektromagnetische Spule angeordnet ist.

Die Spule ragt dabei in jeder Schale in eine vorzugs konische Vertiefung.

Weiters ist vorgesehen, daß sich die Spule in einem antimagnetischen Gehäuse, beispielsweise einem Kunststoffgehäuse befindet.

Ein Ausführungsbeispiel der Erfindung sieht vor, daß der Einlaß und der Auslaß in derselben Schale sind. Dadurch kann die erfindungsgemäße Vorrichtung auch an einem Rohrabschluß montiert werden.

Vorteilhaft ist vorgesehen, daß, wenn mittig eine zweite Spule angeordnet ist, die Spulen Magnetfelder unterschiedlicher Höhe und/oder unterschiedlicher Frequenz erzeugen.

Nachfolgend werden zwei Ausführungsbeispiele der Erfindung an Hand der Figuren der beiliegenden Zeichnungen eingehend beschrieben.

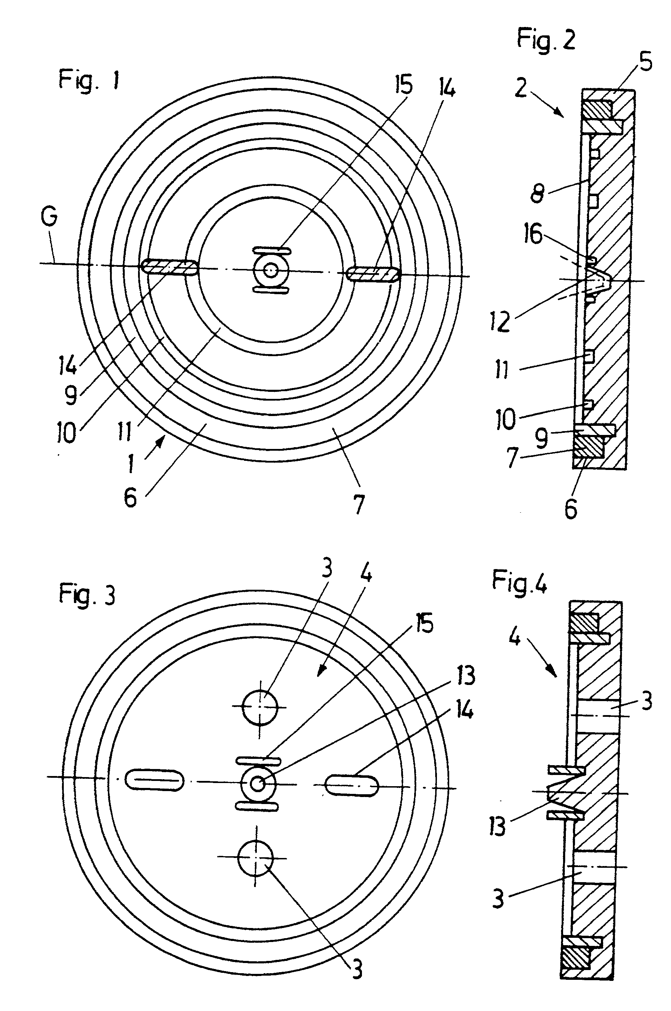

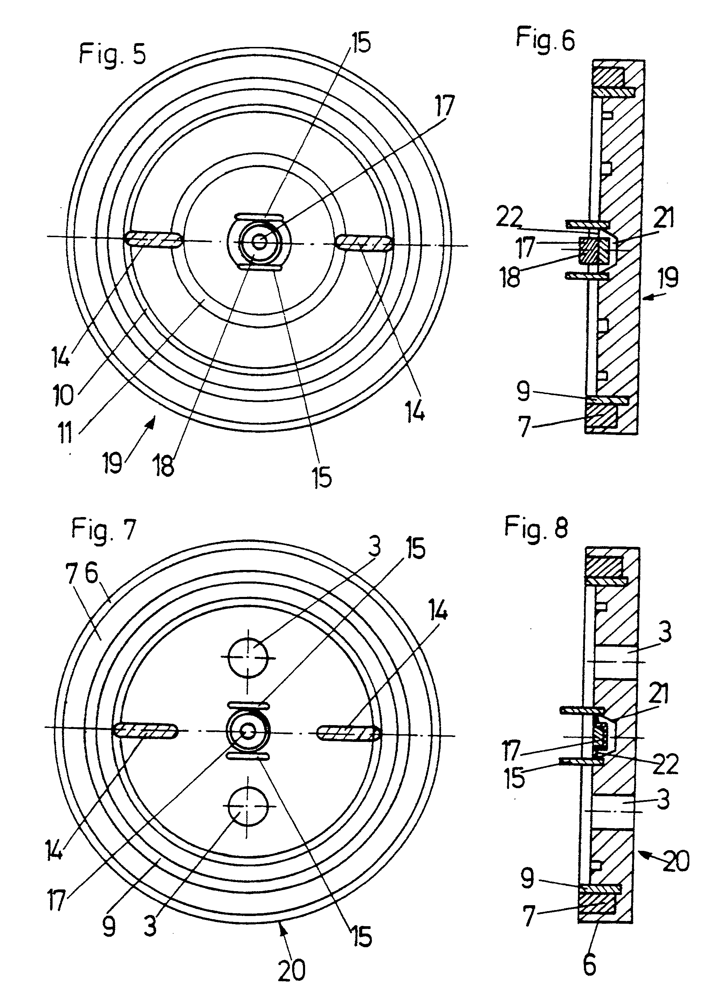

Die Fig. 1 zeigt eine Innenansicht einer Schale eines Ausführungsbeispieles, die Fig. 2 zeigt einen Radialschnitt durch dieselbe Schale, die Fig. 3 zeigt eine Innenansicht auf die zweite Schale dieses Ausführungsbeispieles, die Fig. 4 zeigt einen Radialschnitt durch diese Phase und die Fig. 5 bis 8 zeigen analoge Ansichten der Figuren 1 bis 4 eines zweiten Ausführungsbeispieles der Erfindung.

Die Schale 1 gemäß den Fig. 1 und 2, die auch als Prallschale fungiert, da sich die Ein- und Auslässe 3 in der gegenüberliegenden Schale 4, wie in den Fig. 3 und 4 beschrieben ist, befinden, weist einen Rand 5 auf und eine Aufnahmekammer 6 für eine elektromagnetische Spule 7. Die elektromagnetische Spule 7 ist gegen der Prallkammer 8, die von den beiden Schalen 1, 4 gebildet wird, durch eine Dichtung 9 aus einem Kunststoffmaterial oder einem sonstigen antimagnetischen Material abgedichtet. Die Prallkammer 8 wird dadurch gebildet, daß die Schalen 1 und 4 aneinander gelegt werden.

Die Schale 1 ist an den Innenseiten mit zwei Nuten 10, 11 versehen, wobei die innere Nut 11 dicker als die äußere Nut ist. Die Nuten 10, 11 bilden konzentrische Kreise.

In der Mitte der Schale 1 befindet sich eine kegelstumpfförmige Vertiefung 12. Die gegenüberliegende Schale 4 weist wie gesagt die Einlaß- und Auslaßöffnung 3 auf und ist in der Mitte mit einem vorspringenden Kegelstumpf 13 oder Kegel versehen.

Werden die beiden Schalen 1, 4 aneinander gelegt, so ragt der Kegelstumpf 13 in die Vertiefung 12, und zwar derart, daß ein Spalt gebildet wird, durch den das Wasser hindurchfließen kann.

In der Fig. 2 ist der Kegelstumpf 13 zum besseren Verständnis strichliert angedeutet.

Zwischen den beiden Schalen 1, 4 sind Ablenkstege 14 und 15 angeordnet. Die Ablenkstege 14 und 15 reichen dabei von der Innenwand der Schale 1 bis zur Innenwand der Schale 4 und können vorteilhaft in den Schalen 1, 4 formschlüssig, beispielsweise durch Nuten 16, aufgenommen sein.

Wie aus den Fig. 1 und 3 ersichtlich, sind die Ablenkstege 14, 15 in den Eckpunkten eines Vierecks, nämlich eines Karos angeordnet.

Die beiden Ablenkstege 14, die länger als die Ablenkstege 15 sind, befinden sich auf einer gemeinsamen Geraden G. Dabei überbrücken die Ablenkstege 14 den Abstand zwischen den beiden Nuten 10, 11, d.h. ihre Enden sind jeweils bei der einen Nut 10 oder 11 angeordnet.

Die Ablenkstege 15 sind parallel zueinander und parallel zu den Ablenkstegen 14 und sind in der Mitte der Schalen 1, 4 am Rande der Vertiefung 12 bzw. des Kegelstumpes 13 angeordnet.

Das Ausführungsbeispiel gemäß den Fig. 5 bis 8 unterscheidet sich von dem zuvor beschriebenen Ausführungsbeispiel insbesondere dadurch, daß in der Mitte der Schalen 19, 20 eine weitere elektromagnetische Spule 17 angeordnet ist. Diese Spule 17 befindet sich in einem Kunststoffgehäuse 18.

Die beiden Schalen 19, 20 sind gleich ausgebildet wie die Schalen 1 und 4, nur daß sie anstelle der Vertiefung 12 und des Kegelstumpfes in der Mitte mit einer größeren kegelstumpfförmigen Vertiefung 21 versehen sind, die groß genug ist, die Spule 17 mit ihrem Gehäuse 18 aufzunehmen.

Das Gehäuse 18 ist mittels Streben 22 innerhalb der Vertiefungen 21 im allseitigen Abstand von der Wand gehalten.

Die Schalen 19, 20 sind wiederum mit einer Magnetspule 7, mit einem Dichtring 9 und konzentrischen Nuten 10, 11 versehen.

Die Anordnung der Ablenkstege 14, 15 ist gleich dem Ausführungsbeispiel nach den Fig 1 bis 4.

In der Schale 20 befinden sich wiederum der Einlaß und der Auslaß 3.

In beiden Ausführungsbeispielen kann die Vorrichtung über den Einlaß und den Auslaß 3 in herkömmlicher Weise an ein Wasserleitungsnetz angeschlossen werden. Im zweiten Ausführungsbeispiel können die Spulen 7 und 17 unterschiedliche Frequenz und/oder unterschiedlich starke Magnetfelder erzeugen.

## Ansprüche

1. Vorrichtung zur elektromagnetischen Behandlung von Flüssigkeiten, insbesondere Wasser zur Beseitigung von Kesselstein od.dgl., sowie zum Verhüten von Kesselstein u.dgl., indem die Flüssigkeit einem magnetischen Kraftfeld ausgesetzt wird, mit einer von zwei tellerförmigen Schalen gebildeten Turbulenzkammer, die von einer elektromagnetischen Spule umgeben wird, mit einem Einlaß und einem Auslaß für die Flüssigkeit, wobei der Einlaß und der Auslaß außermittig angeordnet sind und sich zwischen dem Einlaß und dem Auslaß ein Ablenksteg befindet, der dichtend zwischen den Innenwänden der Schalen liegt und wobei ein Dichtring die Turbulenzkammer gegenüber der elektromagnetischen Spule abdichtet, dadurch gekennzeichnet, daß mehrere zueinander parallele Ablenkstege (14, 15) vorgesehen sind, die in Eckpunkten eines Vierecks liegen.

2. Vorrichtung nach Anspruch 1, dadurch gekennzeichnet, daß zwei Ablenkstege (14) auf einer gemeinsamen Geraden (G) liegen und zwei Ablenkstege (15) auf gegenüberliegenden Seiten und parallel zu dieser Geraden (G) angeordnet sind.

3. Vorrichtung nach den Ansprüchen 1 oder 2, dadurch gekennzeichnet, daß jeweils zwei Ablenkstege (14, 15) gleich lang sind.

4. Vorrichtung nach Anspruch 3, dadurch gekennzeichnet, daß die Ablenkstege (14), die auf einer gemeinsamen Geraden (G) liegen, länger als die beiden anderen Ablenkstege (15) sind.

5. Vorrichtung nach Anspruch 1, dadurch gekennzeichnet, daß mindestens eine Schale (1, 19) innen mit Nuten (10, 11) versehen ist, die konzentrische Kreise bilden.

6. Vorrichtung nach den Ansprüchen 2 und 5, dadurch gekennzeichnet, daß die Ablenkstege (14), die auf der gemeinsamen Geraden liegen, mit ihren Enden jeweils eine Nut (10, 11) berühren.

7. Vorrichtung nach Anspruch 2, dadurch gekennzeichnet, daß in der Mitte der Turbulenzkammer zwischen den beiden einander parallel gegenüberliegenden Ablenkstegen (15) auf einer der Schalen (4) ein Kegel und/-oder auf der anderen Schale (1) eine den Kegelstumpf mit Abstand aufnehmende konusartige Vertiefung (12) ausgebildet ist.

8. Vorrichtung nach Anspruch 6, dadurch gekennzeichnet, daß die beiden Nuten (10, 11) unterschiedliche Breite haben.

9. Vorrichtung nach Anspruch 2, dadurch gekennzeichnet, daß in der Mitte der Turbulenzkammer, zwischen den beiden einander parallel gegenüberliegenden Ablenkstegen (15) eine zweite elektromagnetische Spule (17) angeordnet ist.

10. Vorrichtung nach Anspruch 9, dadurch gekennzeichnet, daß die Spule (17) in jeder Schale (19, 20) in eine vorzugsweise konische Vertiefung (21) ragt.

11. Vorrichtung nach Anspruch 9, dadurch gekennzeichnet, daß sich die Spule (17) in einem antimagnetischen Gehäuse (18) befindet.

12. Vorrichtung nach Anspruch 1, dadurch gekennzeichnet, daß der Einlaß (3) und der Auslaß (3) in derselben Schale (4, 20) sind.

13. Vorrichtung nach Anspruch 1 und 9, dadurch gekennzeichnet, daß die Spulen (7, 17) Magnetfelder unterschiedlicher Stärke erzeugen.

14. Vorrichtung nach Anspruch 1 und 9, dadurch gekennzeichnet, daß die Spulen (7, 17) Magnetfelder mit unterschiedlicher Frequenz erzeugen.

## Claims

1. Apparatus for the electromagnetic treatment of liquids, in particular water, for the removal of scale or the like and for the prevention of scale and the like, by the liquid being exposed to a magnetic force field, comprising a turbulence chamber which is formed by two plate-like shells and which is surrounded by an electromagnetic coil, an inlet and an outlet for the liquid, wherein the inlet and the outlet are arranged off-centre and disposed between the inlet and the outlet is a deflection web which lies sealingly between the inside walls of the shells and wherein a sealing ring seals off the turbulence chamber relative to the electromagnetic coil characterised in that there are provided a plurality of mutually parallel deflection webs (14, 15) which are disposed at corner points of a quadrangle.

2. Apparatus according to claim 1 characterised in that two deflection webs (14) are disposed on a common straight line (G) and two deflection webs (15) are arranged on opposite sides and parallel to said straight line (G).

3. Apparatus according to claim 1 or claim 2 characterised in that each two deflection webs (14, 15) are of equal length.

4. Apparatus according to claim 3 characterised in that the deflection webs (14) which are disposed on a common straight line (G) are longer than the other two deflection webs (15).

5. Apparatus according to claim 1 characterised in that at least one shell (1, 19) is internally provided with grooves (10, 11) which form concentric circles.

6. Apparatus according to claims 2 and 5 characterised in that the deflection webs (14) which are disposed on the common straight line touch a respective groove (10, 11) with their ends.

7. Apparatus according to claim 2 characterised in that in the middle of the turbulence chamber between the two deflection webs (15) which are disposed in mutually parallel and opposite relationship, a cone is provided on one of the shells (4) and/or a conical recess (12) for receiving the truncated cone at a spacing is provided on the other shell (1).

8. Apparatus according to claim 6 characterised in that the two grooves (10, 11) are of different widths.

9. Apparatus according to claim 2 characterised in that a second electromagnetic coil (17) is arranged in the centre of the turbulence chamber between the two mutually parallel and oppositely disposed deflection webs (15).

10. Apparatus according to claim 9 characterised in that the coil (17) in each shell (19, 20) projects into a preferably conical recess (21).

11. Apparatus according to claim 9 characterised in that the coil (17) is disposed in an anti-magnetic housing (18).

12. Apparatus according to claim 1 characterised in that the inlet (3) and the outlet (3) are in the same shell (4, 20).

13. Apparatus according to claim 1 and claim 9 characterised in that the coils (7, 17) generate magnetic fields of different strengths.

14. Apparatus according to claim 1 and claim 9 characterised in that the coils (7, 17) generate magnetic fields at different frequencies.

## Revendications

1. Dispositif pour le traitement électromagnétique de liquides, notamment de l'eau, en vue d'éliminer et de prévenir le tarte et/ou une substance similaire, dans lequel le liquide est soumis à un champ de force magnétique, et comportant une chambre de turbulence constituée de deux coquilles en forme d'assiette, qui est entourée d'une bobine électromagnétique, et un orifice d'admission et un orifice d'évacuation pour le liquide, orifices d'admission et d'évacuation qui sont disposés d'une manière excentrique et entre lesquels est interposée une barrette de déflexion qui s'étend d'une manière étanche entre les parois intérieures des coquilles, une bague d'étanchéité rendant la chambre de turbulence étanche vis-à-vis de la bobine électromagnétique, caractérisé en ce qu'il est prévu plusieurs barrettes de déflexion (14, 15) parallèles entre elles, qui sont disposées dans des points angulaires d'un quadrilatère.

2. Dispositif selon la revendication 1, caractérisé en ce que deux barrettes de déflexion (14) s'étendent sur une ligne droite commune (G), tandis que deux barrettes de déflexion (15) sont disposées sur des côtés opposés et parallèlement à cette ligne droite (G).

3. Dispositif selon la revendication 1 ou 2, caractérisé en ce que les barrettes de déflexion (14, 15) sont de longueur égale, deux par deux.

4. Dispositif selon la revendication 3, caractérisé en ce que les barrettes de déflexion (14) qui s'étendent sur une ligne droite commune (G), sont plus longues que les deux autres barrettes de déflexion (15).

5. Dispositif selon la revendication 1, caractérisé en ce que l'une au moins des coquilles (1, 19) est pourvue de rainures (10, 11) qui définissent des cercles concentriques.

6. Dispositif selon les revendications 2 et 5, caractérisé en ce que les barrettes de déflexion (14) qui s'étendent sur la ligne droite commune, viennent respectivement en contact par leurs extrémités avec une rainure (10, 11).

7. Dispositif selon la revendication 2, caractérisé en ce qu'au milieu de la chambre de turbulence, entre les deux barrettes de déflexion (15) disposées d'une manière opposée parallèlement entre elles, sont ménagés, sur l'une (4) des coquilles, un cône, et/ou, sur l'autre coquille (1), un renfoncement conique (12) qui reçoit le tronc du cône avec un certain espace.

8. Dispositif selon la revendication 6, caractérisé en ce que les deux rainures (10, 11) ont des largeurs différentes.

9. Dispositif selon la revendication 2, caractérisé en ce qu'au milieu de la chambre de turbulence, entre les deux barrettes de déflexion (15) disposées d'une manière opposée parallèlement entre elles, il est prévu une seconde bobine électromagnétique (17).

10. Dispositif selon la revendication 9, caractérisé en ce que la bobine (17) s'avance dans chacune des coquilles (19, 20), dans un renfoncement (21), de préférence, conique.

11. Dispositif selon la revendication 9, caractérisé en ce que la bobine (17) est disposée dans un logement antimagnétique (18).

12. Dispositif selon la revendication 1, caractérisé en ce que l'orifice d'admission (3) et l'orifice d'évacuation (3) se trouvent dans la même coquille (4, 20).

13. Dispositif selon les revendications 1 et 9, caractérisé en ce qui les bobines (7, 17) produisent des champs magnétiques d'intensités différentes.

14. Dispositif selon les revendications 1 et 9, caractérisé en ce que les bobines (7, 17) produisent des champs magnétiques qui possèdent des fréquences différentes.

Fig. 1

Fig. 2

G

15    14

2      5

8

16

12

11

10

14
9
10    11
1
6                    7

9
7
6

Fig. 3

3    4

15

13

14

3

Fig.4

4

3

13

3

3

6

Fig. 5

Fig. 6

Fig. 7

Fig. 8